# EUROPEAN PATENT SPECIFICATION

(11) **EP 3 473 826 B1**
(45) Date of publication and mention of the grant of the patent: **16.09.2020**
(21) Application number: 18200279.0
(22) Date of filing: 13.10.2018
(51) Int. Cl.: F01N 3/10, F01N 3/20, F01N 9/00, F01N 3/021, F01N 13/00

(54) **ENGINE EXHAUST AFTERTREATMENT SYSTEM AND METHOD**
SYSTEM UND VERFAHREN ZUR NACHBEHANDLUNG VON MOTORABGASEN
SYSTÈME ET PROCÉDÉ DE POST-TRAITEMENT DES GAZ D'ÉCHAPPEMENT DE MOTEUR

(30) Priority: 17.10.2017 GB 201717016
(43) Date of publication of application: 24.04.2019
(73) Proprietor: Perkins Engines Company Ltd, Peterborough PE1 5FQ (GB)
(72) Inventor: RUTLEDGE, John M., Eastfield Peterborough, PE1 5FQ (GB)
(74) Representative: Wilson, Peter David George

(56) References cited:
- WO-A1-2006/010506
- WO-A1-2008/103109
- WO-A1-2008/114834
- WO-A1-2008/147492
- DE-A1-102005 035 555
- US-B1- 8 828 342

## Description

### Technical Field

The present disclosure relates to an engine exhaust aftertreatment system and method for controlling emissions in an engine exhaust.

### Background

Aftertreatment devices are used to reduce emissions in the exhaust stream of an internal combustion engine. Operation of aftertreatment devices can result in the accumulation of by-products in the aftertreatment device. Performance and durability of either the engine or the aftertreatment device can be impaired if excess levels of by-products accumulate, so it is necessary to periodically regenerate the aftertreatment device to remove some or all of the accumulated by-products.

Recent emissions regulations have brought in a particle count limit for exhaust streams emitted from an engine, necessitating the use of a particulate filter aftertreatment device. In the case of a diesel engine, a diesel particulate filter (DPF) aftertreatment device is used. If soot loading in the DPF is too high the exhaust back pressure increases and causes a risk of uncontrolled regeneration, leading to excessive temperatures which may damage the DPF or downstream devices. Increased exhaust back pressure may also adversely impact engine performance, such as by increasing fuel consumption.

Regeneration of the DPF reduces soot loading in the DPF by oxidation. DPF regeneration solutions include active regeneration, such as hydrocarbon dosing or the use of a burner, which provide high temperature, fast regeneration of the DPF. Passive regeneration provides a slower regeneration of the DPF at a lower temperature, making use of exhaust temperatures. A diesel oxidation catalyst (DOC) upstream of the DPF provides the NO₂ needed for passive regeneration. NO₂ from the DOC is also useful in accelerating the NOₓ reduction in a selective catalytic reduction (SCR) device downstream of the DPF.

Control methods are applied to aftertreatment systems to control operation of the aftertreatment devices and to improve the performance of the entire system. For instance, a controller may determine when active regeneration of the DPF is required and initiate hydrocarbon dosing to reduce soot load in the DPF.

An example of a control method applied to DOC devices is described in US patent 8,562,924, in which a method of controlling the ratio of NO/NOₓ in an exhaust stream is employed to improve the performance of the SCR device and lower NOₓ emissions from an engine. A DOC bypass, in which the exhaust stream may bypass the DOC device, is used to control the amount of NO₂ in the exhaust stream and optimise the SCR reaction to avoid excessive tailpipe NO₂ emissions. Documents US 8 828 342 B1 and WO 2008/147492 A1 also disclose similar engine exhaust aftertreatment systems with optimised thermal management.

### Summary of the Disclosure

Problems have been encountered in aftertreatment systems which passively regenerate DPFs, whereby passive regeneration may occur under certain engine and aftertreatment system conditions that subsequently leads to excessive particulate emission count. One example where this can occur is during high engine loads, such as at peak torque, when the soot load in the DPF is low. Under such conditions, the temperature of the engine exhaust stream may be relatively high and lead to passive regeneration of the DPF, reducing the soot load and DPF filtration efficiency and leading to excessive tailpipe particle number emissions. Eliminating the DOC upstream of the DPF would reduce the risk of excessive passive regeneration leading to high particulate emission count, but would lead to poor DPF regeneration and high back pressure, and also lower SCR NOₓ conversion leading to higher tail pipe NOₓ emissions.

In accordance with one aspect of this disclosure there is provided an engine exhaust aftertreatment system for receiving an exhaust stream from an engine. The aftertreatment system comprises a particle filter and a selective catalytic reduction device provided downstream of the particle filter. A first oxidation catalyst device is provided upstream of the particle filter, and a second oxidation catalyst device is provided between the particle filter and the selective catalytic reduction device. A first bypass device is associated with the first oxidation catalyst device, the first bypass device being selectively operable to bypass the first oxidation catalyst device. A control system is provided, responsive to signals corresponding to a temperature of the exhaust stream from the engine and to a soot load in the particle filter. The control system is configured to activate the first bypass device when both a first criteria and a second criteria are satisfied, the first criteria comprising the temperature of the exhaust stream being above a first threshold value, and the second criteria comprising the soot load in the particle filter being below a second threshold value.

In accordance with a further aspect of this disclosure, there is provided a method for controlling an engine exhaust aftertreatment system comprising a particle filter, a selective catalytic reduction device provided downstream of the particle filter, and a first oxidation catalyst device provided upstream of the particle filter. The method comprises providing a first bypass device associated with the first oxidation catalyst device, the first bypass device being selectively operable to bypass the first oxidation catalyst device, and providing a control system configured to be responsive to signals corresponding to a temperature of the exhaust stream from the engine and to a soot load in the particle filter. The method further comprises determining, by the control system, whether the temperature of the exhaust stream are above a first threshold value and determining, by the control system, whether the soot load in the particle filter is below a second threshold value. The first bypass device is operated to bypass the first oxidation catalyst device when the control system determines the temperature of the exhaust stream are above a first threshold value and the soot load in the particle filter is below a second threshold value.

Other features and aspects of this disclosure will be apparent from the following description and the accompanying drawings.

### Brief Description of the Drawings

FIG. 1 shows a first engine exhaust aftertreatment system according to embodiments of the present disclosure;
FIG. 2 shows a second engine exhaust aftertreatment system according to embodiments of the present disclosure; and
FIG. 3 shows a third engine exhaust aftertreatment system according to embodiments of the present disclosure; and
FIG. 4 shows a method for controlling an engine exhaust aftertreatment system according to embodiments of the present disclosure.

### Detailed Description

Reference will now be made in detail to specific embodiments or features, examples of which are illustrated in the accompanying drawings. Wherever possible, corresponding or similar reference numbers will be used throughout the drawings to refer to the same or corresponding parts.

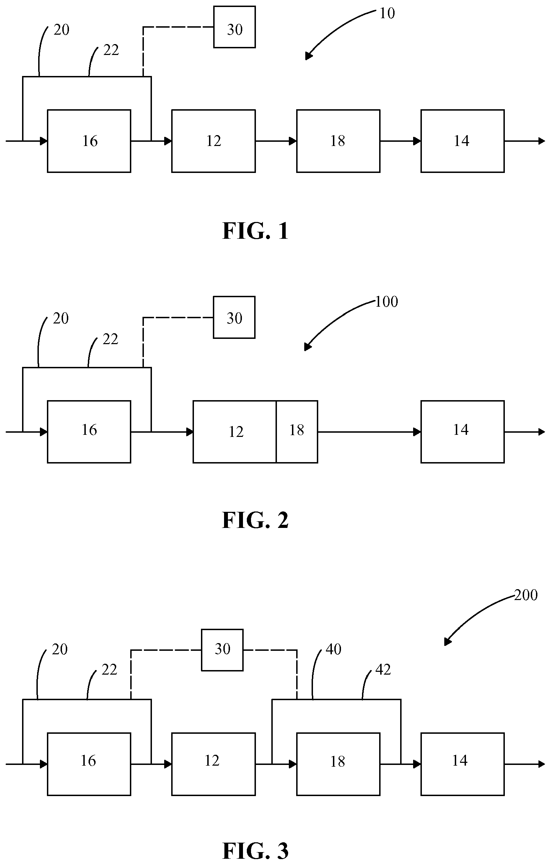

FIG. 1 shows an engine exhaust aftertreatment system 10 for receiving an exhaust stream from an engine (not shown) according to embodiments of this disclosure, for instance from the exhaust manifold of the engine. The aftertreatment system 10 will be described with reference to a diesel engine, however it will be appreciated that the system may be used with other forms of engine where emission control is needed, such as gas compression engines.

The aftertreatment system 10 comprises a particle filter 12 and a selective catalytic reduction (SCR) device 14 provided downstream of the particle filter 12. The particle filter 12 may be a diesel particle filter (DPF) in some embodiments of the disclosure. The terms upstream and downstream are used in this description as terms that are relative to the direction of flow of the exhaust stream, from the engine to a tailpipe. Thus the term upstream denotes towards, or closer to, the engine, whilst downstream denotes towards, or closer to, the tailpipe and so further away from the engine.

A first oxidation catalyst device 16 is provided upstream of the particle filter 12, and a second oxidation catalyst device 18 is provided between the particle filter 12 and the SCR device 14. The first and second oxidation catalyst devices 16 and 18 may be diesel oxidation catalyst devices (DOC) in embodiments of this disclosure.

The aftertreatment system 10 further comprises a first bypass device 20 associated with the first oxidation catalyst device 16. The first bypass device 20 is selectively operable to bypass the first oxidation catalyst device 16. When the first bypass device 20 is operated to bypass the first oxidation catalyst device 16, the exhaust stream from the engine passes through the bypass device 20 and into the particle filter 12 without passing through the first oxidation catalyst device 16. In some embodiments, the first bypass device 20 may comprise a bypass conduit 22 with an associated valve to selectively direct the exhaust stream into the bypass conduit 22 or into the first oxidation catalyst device 16. Any other suitable form of bypass device known to those skilled in the art may be used.

The engine system 10 further comprises a control system 30 that is responsive to signals corresponding to a temperature of the exhaust stream from the engine and to a soot load in the particle filter to generate signals to selectively activate the first bypass device 20 as described in detail below. Soot load may be defined as grams of soot per litre of DPF volume, and may also be described as a % value relative to a maximum allowable soot loading of the DPF (i.e. if 8 g/l is the maximum allowable soot loading then 2 g/l will be 25%). The control system 30 may take any suitable form known to those in the art, including circuitry such as a microcontroller, processor, or embedded controller. In some embodiments the control system 30 may be integral with an engine control unit, or ECU, (not shown) one example of which is the control system 30 being a process executing on a processor on which the ECU is also executing. In alternative embodiments the control system 30 may be separate from the ECU.

The control system 30 receives signals from sensors (not shown) corresponding to a temperature of the exhaust stream from the engine and to a soot load in the particle filter. In embodiments of this disclosure, other signals indicative of engine and aftertreatment system state may also be received by the control system 30. Any suitable form and placement of sensors known to those in the art may be used. For instance, a temperature sensor may be placed at or near an inlet to the particle filter 12. Various sensors types may be used to provide signals corresponding to a soot load in the particle filter 12, such as pressure sensors at the inlet and outlet of the particle filter 12 whereby soot load is determined from a pressure difference at the inlet and outlet (higher soot load corresponding to a greater pressure difference) or a radio-frequency sensor located near the outlet of the particle filter 12 (since soot absorbs radio-frequency). Other sensor types known to those in the art may also be used with embodiments of the disclosure.

The sensors may communicate with the control system 30 directly, alternatively some or all of the sensors may communicate with the ECU which then communicates with the control system 30. In some embodiments, other engine parameters such as engine speed may be communicated to the control system 30 by the ECU. The sensors may communicate with the control system 30 and/or the ECU by any suitable digital or analog signal sent over a wired, optical or wireless connection.

The control system 30 is configured to activate the first bypass device 20 when both a first criteria and a second criteria are satisfied, the first criteria comprising the temperature of the exhaust stream being above a first threshold value, and the second criteria comprising the soot load in the particle filter being below a second threshold value. The control system 30 identifies when the combination of high exhaust temperatures and low soot load puts the particle filter 12 at risk of excessive passive regeneration that would reduce the soot load to below a minimum level for effective particle filtration, which may lead to high particulate emission count from the tailpipe. When the control system 30 detects these conditions, the control system 30 activates the first bypass device 20 to bypass the first oxidation catalyst device 16. Bypassing the first oxidation catalyst device 16 reduces the amount of NO₂ present in the exhaust stream entering the particle filter 12, thereby reducing or preventing regeneration.

The second oxidation catalyst device 18 ensures there is sufficient NO₂ present in the exhaust stream entering the SCR device 14 for the SCR device 14 to reduce NOₓ emissions. The second oxidation catalyst device 18 may be sized to produce enough NO₂ to maintain an acceptable NOₓ conversion efficiency in the SCR device 14 while not producing so much NO₂ that the NO₂ levels exceed 50% when the first oxidation catalyst device 16 is not bypassed. In aftertreatment systems that include a diesel exhaust fluid (DEF) injector, it is preferred that the second oxidation catalyst device 18 is provided upstream of the DEF injector.

The first threshold value may be determined from engine parameters (e.g. exhaust temperatures) and particle filter 12 operating characteristics so that the first criteria will be satisfied when the temperature of the exhaust stream is in a region at which passive regeneration occurs. In embodiments of the disclosure, the second threshold value may be commensurate with a soot load in the particle filter 12 at which filtration efficiency of the particle filter 12 is in the range 70-99%, more preferably 85-99%, and most preferably 95-99%. In embodiments of the present disclosure, the second threshold value may be commensurate with a soot load in the particle filter 12 at which filtration efficiency of the particle filter 12 is below 99%.

Referring now to FIG. 2, an engine exhaust aftertreatment system 100 for receiving an exhaust stream according to embodiments of this disclosure is shown. The aftertreatment system 100 is of the same general form as the aftertreatment system 10 shown in FIG. 1, and like reference numerals are used to denote like parts.

The aftertreatment system 100 differs from the aftertreatment system 10 in that the second oxidation catalyst device 18 is formed integrally with the particle filter 12, adjacent an outlet thereof. The second oxidation catalyst device 18 of the aftertreatment system 100 may comprise a coating provided on a portion of the particle filter 12 adjacent an outlet thereof. Such a configuration provides a more compact arrangement which may be suitable for engines with limited space for aftertreatment systems.

Referring now to FIG. 3, an engine exhaust aftertreatment system 200 for receiving an exhaust stream according to embodiments of this disclosure is shown. The aftertreatment system 200 is of the same general form as the aftertreatment system 10 shown in FIG. 1, and like reference numerals are used to denote like parts.

The aftertreatment system 200 differs from the aftertreatment system 10 in that the aftertreatment system 200 further comprises a second bypass device 40 associated with the second oxidation catalyst device 18. The second bypass device 40 may comprise a second bypass conduit 42 provided around the second oxidation catalyst device 18 and a second bypass valve (not shown) that is selectively operable to direct the exhaust stream to either the second oxidation catalyst device 18 or to the second bypass conduit 42. Operation of the second bypass device 40 is controlled by the control system 30, and may be used to improve performance of the SCR device 14, for instance by bypassing the second oxidation catalyst device 18 if NO₂ levels exceed 50% at the input to the SCR device 14, which may occur if the first oxidation catalyst device 16 is not bypassed.

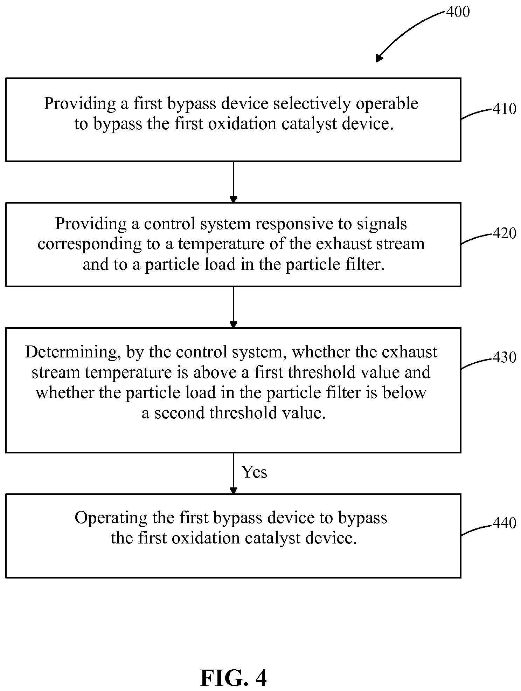

Referring now to FIG. 4, there is shown a method 400 for controlling an engine exhaust aftertreatment system comprising a particle filter, a selective catalytic reduction device provided downstream of the particle filter, and a first oxidation catalyst device provided upstream of the particle filter, according to embodiments of the present disclosure.

The method 400 comprises, at step 410, providing a first bypass device associated with the first oxidation catalyst device, the first bypass device being selectively operable to bypass the first oxidation catalyst device.

At step 420, the method comprises providing a control system configured to be responsive to signals corresponding to a temperature of the exhaust stream from the engine and to a soot load in the particle filter.

Next, at step 430, the method comprises determining, by the control system, whether the temperature of the exhaust stream is above a first threshold value and whether the soot load in the particle filter is below a second threshold value. In embodiments of the present disclosure, the second threshold value may be commensurate with a soot load in the particle filter at which filtration efficiency of the particle filter is in the range 70-99%, more preferably 85-99% and most preferably 95-99%.

At step 440 the method comprises operating the first bypass device to bypass the first oxidation catalyst device when the control system determines the temperature of the exhaust stream are above a first threshold value and the soot load in the particle filter is below a second threshold value.

### Industrial Application

Embodiments of the present disclosure have been described that provide an engine exhaust aftertreatment system and a method for controlling an engine which may improve performance of the aftertreatment system and may reduce emission such as particulate emission count. Such systems and methods may be advantageous in reducing the risk of excessive particulate emission count by reducing excessive passive regeneration of the DPF when the soot load in the DPF is low.

While aspects of the present disclosure have been particularly shown and described with reference to the embodiments above, it will be understood by those skilled in the art that various additional embodiments may be contemplated by the modification of the disclosed machines, systems and methods without departing from the scope of the present disclosure as set forth in the claims.

## Claims

1. An engine exhaust aftertreatment system for receiving an exhaust stream from an engine, comprising:
a particle filter (12) and a selective catalytic reduction device (14) provided downstream of the particle filter;
a first oxidation catalyst device (16) provided upstream of the particle filter;
a second oxidation catalyst device (18) provided between the particle filter and the selective catalytic reduction device;
a first bypass device (20) associated with the first oxidation catalyst device, the first bypass device being selectively operable to bypass the first oxidation catalyst device; and
a control system responsive to signals corresponding to a temperature of the exhaust stream from the engine and to a soot load in the particle filter, the control system configured to activate the first bypass device when both a first criteria and a second criteria are satisfied, the first criteria comprising the temperature of the exhaust stream being above a first threshold value, and the second criteria comprising the soot load in the particle filter being below a second threshold value.

2. The system of claim 1, wherein the first bypass device comprises a first bypass conduit provided around the first oxidation catalyst device and a first bypass valve selectively operable to direct the exhaust stream to either the first oxidation catalyst device or to the first bypass conduit.

3. The system of claim 1 or 2, wherein the second oxidation catalyst device is formed integral with the particle filter adjacent an outlet thereof.

4. The system of claim 3, wherein the second oxidation catalyst device comprises a coating provided on a portion of the particle filter adjacent an outlet thereof.

5. The system of claim 1 or 2, further comprising a second bypass device (40) associated with the second oxidation catalyst device.

6. The system of claim 5, wherein the second bypass device comprises a second bypass conduit provided around the second oxidation catalyst device and a second bypass valve selectively operable to direct the exhaust stream to either the second oxidation catalyst device or to the second bypass conduit.

7. The system of any of claims 1 to 6, wherein the second threshold value is commensurate with a soot load in the particle filter at which filtration efficiency of the particle filter is in the range 70-99%.

8. The system of any of claim 7, wherein the second threshold value is commensurate with a soot load in the particle filter at which filtration efficiency of the particle filter is in the range 85-99%.

9. The system of any of claim 7, wherein the second threshold value is commensurate with a soot load in the particle filter at which filtration efficiency of the particle filter is in the range 95-99%.

10. The system of any of claim 7, wherein the second threshold value is commensurate with a soot load in the particle filter at which filtration efficiency of the particle filter is 99%.

11. A method for controlling an engine exhaust aftertreatment system comprising a particle filter (12), a selective catalytic reduction device (14) provided downstream of the particle filter, and a first oxidation catalyst device (16) provided upstream of the particle filter, comprising:
providing a first bypass device (20) associated with the first oxidation catalyst device, the first bypass device being selectively operable to bypass the first oxidation catalyst device;
providing a control system configured to be responsive to signals corresponding to a temperature of the exhaust stream from the engine and to a soot load in the particle filter;
determining, by the control system, whether the temperature of the exhaust stream is above a first threshold value;
determining, by the control system, whether the soot load in the particle filter is below a second threshold value; and
operating the first bypass device to bypass the first oxidation catalyst device when the control system determines the temperature of the exhaust stream are above a first threshold value and the soot load in the particle filter is below a second threshold value.

12. The method of claim 11, wherein the second threshold value is commensurate with a soot load in the particle filter at which filtration efficiency of the particle filter is in the range 70-99%.

13. The method of claim 12, wherein second threshold value is commensurate with a soot load in the particle filter at which filtration efficiency of the particle filter is in the range 85-99%.

14. The method of claim 12, wherein second threshold value is commensurate with a soot load in the particle filter at which filtration efficiency of the particle filter is in the range 95-99%.

15. The method of claim 12, wherein second threshold value is commensurate with a soot load in the particle filter at which filtration efficiency of the particle filter is 99%.

## Patentansprüche

1. Motorabgasnachbehandlungssystem zum Aufnehmen eines Abgasstroms von einem Motor, umfassend:
einen Partikelfilter (12) und eine selektive katalytische Reduktionsvorrichtung (14), die stromabwärts von dem Partikelfilter vorgesehen ist;
eine erste Oxidationskatalysatorvorrichtung (16), die stromaufwärts von dem Partikelfilter vorgesehen ist;
eine zweite Oxidationskatalysatorvorrichtung (18), die zwischen dem Partikelfilter und der selektiven katalytischen Reduktionsvorrichtung vorgesehen ist;
eine erste Umgehungsvorrichtung (20), die mit der ersten Oxidationskatalysatorvorrichtung assoziiert ist, wobei die erste Bypass-Vorrichtung selektiv dazu betreibbar ist, die erste Oxidationskatalysatorvorrichtung zu umgehen; und
ein Steuersystem, das auf Signale anspricht, die einer Temperatur des Abgas stroms von dem Motor und einer Rußbeladung in dem Partikelfilter entsprechen, wobei das Steuersystem dazu konfiguriert ist, die erste Umgehungsvorrichtung zu aktivieren, wenn sowohl ein erstes Kriterium als auch ein zweites Kriterium erfüllt werden, wobei das erste Kriterium umfasst, dass die Temperatur des Abgasstroms über einem ersten Grenzwert liegt, und das zweite Kriterium umfasst, dass die Rußbeladung in dem Partikelfilter unter einem zweiten Grenzwert liegt.

2. System nach Anspruch 1, wobei die erste Umgehungsvorrichtung eine erste Umgehungsleitung, die um die erste Oxidationskatalysatorvorrichtung vorgesehen ist, und ein erstes Umgehungsventil umfasst, das selektiv dazu betreibbar ist, den Abgasstrom entweder zu der ersten Oxidationskatalysatorvorrichtung oder zu der ersten Umgehungsleitung zu lenken.

3. System nach Anspruch 1 oder 2, wobei die zweite Oxidationskatalysatorvorrichtung integral mit dem Partikelfilter angrenzend an einem Austritt davon geformt ist.

4. System nach Anspruch 3, wobei die zweite Oxidationskatalysatorvorrichtung eine Beschichtung umfasst, die auf einem Teil des Partikelfilters angrenzend an einem Austritt davon vorgesehen ist.

5. System nach Anspruch 1 oder 2, weiterhin umfassend eine zweite Umgehungsvorrichtung (40), die mit der zweiten Oxidationskatalysatorvorrichtung assoziiert ist.

6. System nach Anspruch 5, wobei die zweite Umgehungsvorrichtung eine zweite Umgehungsleitung, die um die zweite Oxidationskatalysatorvorrichtung vorgesehen ist, und ein zweites Umgehungsventil umfasst, das selektiv dazu betreibbar ist, den Abgasstrom entweder zu der zweiten Oxidationskatalysatorvorrichtung oder zu der zweiten Umgehungsleitung zu lenken.

7. System nach einem der Ansprüche 1 bis 6, wobei der zweite Grenzwert entsprechend einer Rußbeladung in dem Partikelfilter ist, bei der die Filtrationseffizienz des Partikelfilters im Bereich von 70-99 % liegt.

8. System nach Anspruch 7, wobei der zweite Grenzwert entsprechend einer Rußbeladung in dem Partikelfilter ist, bei der die Filtrationseffizienz des Partikelfilters im Bereich von 85-99 % liegt.

9. System nach Anspruch 7, wobei der zweite Grenzwert entsprechend einer Rußbeladung in dem Partikelfilter ist, bei der die Filtrationseffizienz des Partikelfilters im Bereich von 95-99 % liegt.

10. System nach Anspruch 7, wobei der zweite Grenzwert entsprechend einer Rußbeladung in dem Partikelfilter ist, bei der die Filtrationseffizienz des Partikelfilters 99 % beträgt.

11. Verfahren zur Steuerung eines Motorabgasnachbehandlungssystems, umfassend einen Partikelfilter (12), eine selektive katalytische Reduktionsvorrichtung (14), die stromabwärts von dem Partikelfilter vorgesehen ist, und eine erste Oxidationskatalysatorvorrichtung (16), die stromaufwärts von dem Partikelfilter vorgesehen ist, umfassend:
Bereitstellen einer ersten Umgehungsvorrichtung (20), die mit der ersten Oxidationskatalysatorvorrichtung assoziiert ist, wobei die erste Bypass-Vorrichtung selektiv dazu betreibbar ist, die erste Oxidationskatalysatorvorrichtung zu umgehen;
Bereitstellen eines Steuersystems, das dazu konfiguriert ist, auf Signale anzusprechen, die einer Temperatur des Abgasstroms von dem Motor und einer Rußbeladung in dem Partikelfilter entsprechen;
Bestimmen durch das Steuersystem, ob die Temperatur des Abgasstroms über einem ersten Grenzwert liegt;
Bestimmen durch das Steuersystem, ob die Rußbeladung in dem Partikelfilter unter einem zweiten Grenzwert liegt; und
Betreiben der ersten Umgehungsvorrichtung, um die erste Oxidationskatalysatorvorrichtung zu umgehen, wenn das Steuersystem bestimmt, dass die Temperatur des Abgasstroms über einem ersten Grenzwert liegt und die Rußbeladung in dem Partikelfilter unter einem zweiten Grenzwert liegt.

12. Verfahren nach Anspruch 11, wobei der zweite Grenzwert entsprechend einer Rußbeladung in dem Partikelfilter ist, bei der die Filtrationseffizienz des Partikelfilters im Bereich von 70-99 % liegt.

13. Verfahren nach Anspruch 12, wobei der zweite Grenzwert entsprechend einer Rußbeladung in dem Partikelfilter ist, bei der die Filtrationseffizienz des Partikelfilters im Bereich von 85-99 % liegt.

14. Verfahren nach Anspruch 12, wobei der zweite Grenzwert entsprechend einer Rußbeladung in dem Partikelfilter ist, bei der die Filtrationseffizienz des Partikelfilters im Bereich von 95-99 % liegt.

15. Verfahren nach Anspruch 12, wobei der zweite Grenzwert entsprechend einer Rußbeladung in dem Partikelfilter ist, bei der die Filtrationseffizienz des Partikelfilters 99 % beträgt.

## Revendications

1. Système de traitement postcombustion des gaz d'échappement de moteur servant à recevoir un flux de gaz d'échappement en provenance d'un moteur, comportant :
un filtre à particules (12) et un dispositif de réduction catalytique sélective (14) mis en œuvre en aval par rapport au filtre à particules ;
un premier dispositif catalyseur d'oxydation (16) mis en œuvre en amont par rapport au filtre à particules ;
un deuxième dispositif catalyseur d'oxydation (18) mis en œuvre entre le filtre à particules et le dispositif de réduction catalytique sélective ;
un premier dispositif de dérivation (20) associé au premier dispositif catalyseur d'oxydation, le premier dispositif de dérivation servant de manière sélective à contourner le premier dispositif catalyseur d'oxydation ; et
un système de commande qui réagit à des signaux correspondant à une température du flux de gaz d'échappement en provenance du moteur et à une charge de suie dans le filtre à particules, le système de commande étant configuré pour actionner le premier dispositif de dérivation quand à la fois un premier critère et un deuxième critère sont satisfaits, le premier critère comportant la température du flux de gaz d'échappement qui est supérieure à une première valeur de seuil, et le deuxième critère comportant la charge de suie dans le filtre à particules qui est inférieure à une deuxième valeur de seuil.

2. Système selon la revendication 1, dans lequel le premier dispositif de dérivation comporte un premier conduit de dérivation mis en œuvre autour du premier dispositif catalyseur d'oxydation et une première valve de dérivation servant de manière sélective à diriger le flux de gaz d'échappement vers soit le premier dispositif catalyseur d'oxydation soit le premier conduit de dérivation.

3. Système selon la revendication 1 ou la revendication 2, dans lequel le deuxième dispositif catalyseur d'oxydation est formé d'un seul tenant avec le filtre à particules de manière adjacente par rapport à une sortie de celui-ci.

4. Système selon la revendication 3, dans lequel le deuxième dispositif catalyseur d'oxydation comporte un revêtement mis en œuvre sur une partie du filtre à particules de manière adjacente par rapport à une sortie de celui-ci.

5. Système selon la revendication 1 ou la revendication 2, comportant par ailleurs un deuxième dispositif de dérivation (40) associé au deuxième dispositif catalyseur d'oxydation.

6. Système selon la revendication 5, dans lequel le deuxième dispositif de dérivation comporte un deuxième conduit de dérivation mis en œuvre autour du deuxième dispositif catalyseur d'oxydation et une deuxième valve de dérivation servant de manière sélective à diriger le flux de gaz d'échappement vers soit le deuxième dispositif catalyseur d'oxydation soit le deuxième conduit de dérivation.

7. Système selon l'une quelconque des revendications 1 à 6, dans lequel la deuxième valeur de seuil est proportionnelle à une charge de suie dans le filtre à particules au niveau de laquelle l'efficacité de filtration du filtre à particules se trouve dans la plage allant de 70 à 99 %.

8. Système selon la revendication 7, dans lequel la deuxième valeur de seuil est proportionnelle à une charge de suie dans le filtre à particules au niveau de laquelle l'efficacité de filtration du filtre à particules se trouve dans la plage allant de 85 à 99 %.

9. Système selon la revendication 7, dans lequel la deuxième valeur de seuil est proportionnelle à une charge de suie dans le filtre à particules au niveau de laquelle l'efficacité de filtration du filtre à particules se trouve dans la plage allant de 95 à 99 %.

10. Système selon la revendication 7, dans lequel la deuxième valeur de seuil est proportionnelle à une charge de suie dans le filtre à particules au niveau de laquelle l'efficacité de filtration du filtre à particules est de 99 %.

11. Procédé de commande d'un système de traitement postcombustion des gaz d'échappement de moteur comportant un filtre à particules (12), un dispositif de réduction catalytique sélective (14) mis en œuvre en aval par rapport au filtre à particules, et un premier dispositif catalyseur d'oxydation (16) mis en œuvre en amont par rapport au filtre à particules, comportant les étapes consistant à :
mettre en œuvre un premier dispositif de dérivation (20) associé au premier dispositif catalyseur d'oxydation, le premier dispositif de dérivation servant de manière sélective à contourner le premier dispositif catalyseur d'oxydation ;
mettre en œuvre un système de commande configuré pour réagir à des signaux correspondant à une température du flux de gaz d'échappement en provenance du moteur et à une charge de suie dans le filtre à particules ;
déterminer, par le système de commande, si la température du flux de gaz d'échappement est supérieure à une première valeur de seuil ;
déterminer, par le système de commande, si la charge de suie dans le filtre à particules est inférieure à une deuxième valeur de seuil ; et
faire fonctionner le premier dispositif de dérivation pour contourner le premier dispositif catalyseur d'oxydation quand le système de commande détermine que la température du flux de gaz d'échappement est supérieure à une première valeur de seuil et que la charge de suie dans le filtre à particules est inférieure à une deuxième valeur de seuil.

12. Procédé selon la revendication 11, dans lequel la deuxième valeur de seuil est proportionnelle à une charge de suie dans le filtre à particules au niveau de laquelle l'efficacité de filtration du filtre à particules se trouve dans la plage allant de 70 à 99 %.

13. Procédé selon la revendication 12, dans lequel la deuxième valeur de seuil est proportionnelle à une charge de suie dans le filtre à particules au niveau de laquelle l'efficacité de filtration du filtre à particules se trouve dans la plage allant de 85 à 99 %.

14. Procédé selon la revendication 12, dans lequel la deuxième valeur de seuil est proportionnelle à une charge de suie dans le filtre à particules au niveau de laquelle l'efficacité de filtration du filtre à particules se trouve dans la plage allant de 95 à 99 %.

15. Procédé selon la revendication 12, dans lequel la deuxième valeur de seuil est proportionnelle à une charge de suie dans le filtre à particules au niveau de laquelle l'efficacité de filtration du filtre à particules est de 99 %.
